# EUROPEAN PATENT APPLICATION

(11) **EP 1 537 817 A1**
(43) Date of publication of application: **08.06.2005**
(21) Application number: 04252694.7
(22) Date of filing: 08.05.2004
(51) Int. Cl.: A47L 9/24, F16L 27/08

(54) **Bendable extension pipe for a vacuum cleaner**

(30) Priority: 02.12.2003 KR 2003086626
(71) Applicant: Samsung Gwangju Electronics Co., Ltd., Gwangju-city (KR)
(72) Inventor: Jeon, Kyong-hui, Seosan-city Chungcheongnam-do (KR)
(74) Representative: Wilson Gunn M'Caw

(57) **Abstract**

A bendable extension pipe (100) for a vacuum cleaner that comprise at least two sections capable of being bent relative to each other according to user's selection comprising a first extension pipe section (110); a second extension pipe (120) section pivotably connected to the first extension pipe section (110); and a release handle (130) selectively for locking the first and second extension pipe sections (110,120) in a predetermined configuration, wherein the first and second extension pipe sections (110,120) are released from the locking configuration when a user depresses the release handle (130).

## Description

### BACKGROUND OF THE INVENTION

### Field of the Invention

The present invention relates generally to a vacuum cleaner and in particular to a bendable extension pipe for a vacuum cleaner, the bendable extension pipe having a joint foldably connected to the vacuum cleaner, thereby permitting convenient cleaning of spaces under pieces of furniture, such as bed or sofa.

### Description of the Background Art

In general, a vacuum cleaner draws in contaminants on a surface to be cleaned which are entrained in air drawn in to the vacuum cleaner with the aid of a vacuum suction force generated by a vacuum suction motor provided in a cleaner body. Generally, a flow passage is formed so as to connect the cleaner body and a suction brush used for performing the cleaning operation in and airtight connection.

Such a flow passage may be variously provided depending on the types of vacuum cleaners being used. For example, a canister vacuum cleaner is provided with a flexible hose connecting a cleaner body and a manipulation handle, and an extension pipe is provided for connecting the manipulation handle and the suction brush. Such an extension pipe may be provided as an extendible type that can be adjusted in length, as required, or as a combination type that comprises a plurality of segmented extension tubes capable of being individually disassembled or assembled for use depending on the desired length of the pipe.

However, in the case of a suction brush connected by a conventional extension pipe, the angle between the extension tube and the suction brush is typically fixed, that is, having a straight connection between the segments of the extension pipe. Therefore, in order to clean areas under furniture, such as a bed, sofa, etc., it is necessary for a user to perform the cleaning operation while rotating the extension pipe after lowering his/her posture and orienting the suction brush so it is in close contact with the floor surface. In addition, even if the angle between the extension pipe and the suction brush is adjustable, inconvenience results in that the user must lower his/her body in order to insert the suction brush into an area under the furniture. An improved system for cleaning under furniture is demanded.

### SUMMARY OF THE INVENTION

Accordingly, the present invention has been conceived to solve the above-mentioned problems occurring in the conventional vacuum cleaners, and an aspect of the present invention is to provide a bendable extension pipe for a vacuum cleaner having an improved construction that permits a user to conveniently perform cleaning operations by simple manipulation of a button without needing to bend the body or lower his or her posture.

In order to achieve the above aspect according to the present invention, a bendable extension pipe for a vacuum cleaner comprises first and second extension pipe sections connected so that they can be selectively bent with respect to one another in a bent configuration, and a release handle that releases the bent configuration of the first and second extension pipe sections when a user depresses the release handle. For smoother operation, it is preferable that the connection joint between the first and second extension pipe sections is enclosed by an articulated cover, and a resilient member is provided within the articulated cover to resiliently support the release handle.

According to a first embodiment of the present invention, the first extension pipe section comprises: a tubular body, a cylindrical joint formed at an end of the tubular body and connected to the second extension pipe section to thereby form the joint connection, and hinge projections formed on the body to project outwardly from a surface thereof so provide a mount for the release handle.

The cylindrical joint may have an axis of rotation intersecting a virtual axis of the flow passage formed in the tubular body in a perpendicular orientation.

The hinge projections preferably comprise a pair of cylindrical projections formed on opposite sides of the tubular body to project coaxially outwardly from the surface of the tubular body, and the release handle preferably comprises hinge slots providing for a sliding interference fit onto one of the cylindrical hinge projections so that the release handle covers at least a part of the circumference of the first extension pipe section, wherein each hinge slot comprises a slot opening end that opens outwardly from the release handle and a closed end. The closed end is preferably formed to correspond to the diameter of the corresponding hinge projection, and a bottleneck is preferably formed between the opening end and the closed end so as to prevent the hinge projections from breaking away from the hinge slots.

The lever may be formed integral with the release handle.

The articulated cover may comprise one or more seat projections on which an elastic member is seated, and a guide ridge having a stepped part, the tip end of the lever being engaged with the stepped part, in which the tip end of the lever is supported by any of the seat projections, thereby restraining the folding angle between the first and second extension pipe sections. In addition, it is also preferable that the guide ridge is projectedly formed on the inner surface of the articulated cover in a form of spiral track and the elastic member is formed from a leaf spring.

### BRIEF DESCRIPTION OF THE DRAWINGS

The above described and other aspects, features and advantages of the present invention will be more apparent from an understanding of the following detailed description taken with reference to the accompanying drawings, in which:

Fig. 1 is a perspective view of a bendable extension pipe for a vacuum cleaner according to the present invention;

Fig. 2 is an exploded perspective view of the bendable extension pipe for a vacuum cleaner according to the present invention;

Fig. 3 is a detailed, perspective view showing the bendable extension pipe for a vacuum cleaner according to the present invention with a closure cover removed; and

Figs. 4 and 5 are partially cut-away side views showing the initial state and the folded state, respectively, of the bendable extension pipe for a vacuum cleaner according to the present invention.

### DETAILED DESCRIPTION OF THE EXEMPLARY EMBODIMENTS

Hereinbelow, a bendable extension pipe for a vacuum cleaner according to the present invention will be described in detail with reference to the accompanying drawings.

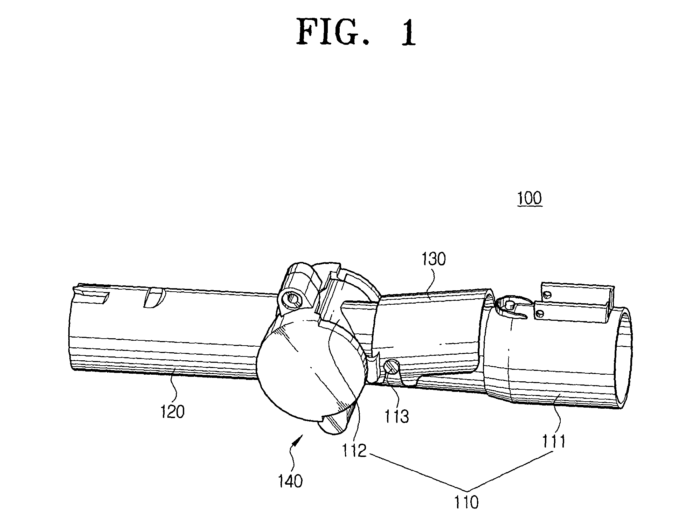

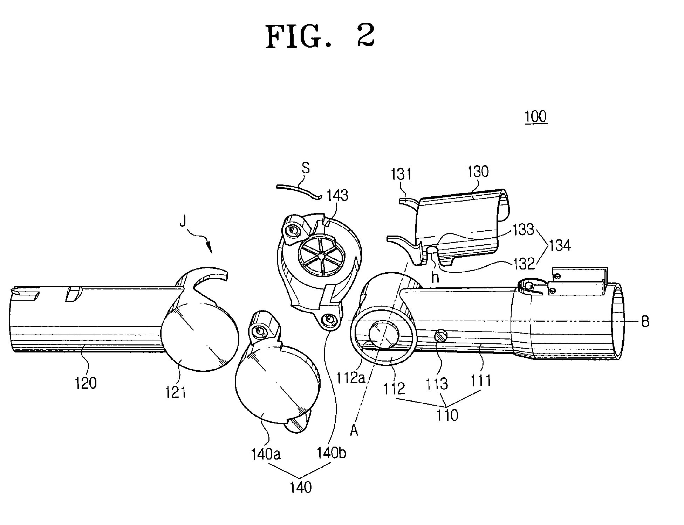

As shown in Figs. 1 and 2, a bendable extension pipe 100 comprises a first extension pipe section 110, a second extension pipe section 120, a release handle 130, and an articulated cover 140.

The first extension pipe section 110 comprises a tubular body 111, a cylindrical joint 112 formed at one end of the body 111, for providing a joint connection of tubular body 111 to the second extension pipe section 120, and hinge projections 113 formed on the body 111 to project outwardly from a surface so as to provide an installation mount for the release handle.

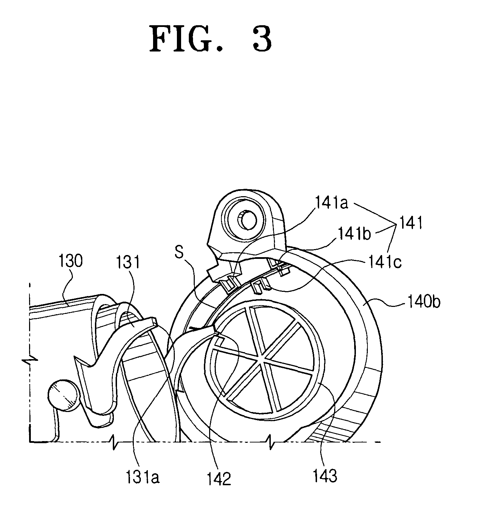

The cylindrical joint 112 is preferably arranged in such a way that its axis, shown as broken line A in Fig. 2, perpendicularly intersects the virtual central axis, shown as broken line B, of a flow passage formed within the body 111. Protrusions 112a are formed substantially at the centers of the opposite lateral sides to project outwardly therefrom, so as to be in engaging contact with the inner peripheries of guide ridges 143 (see Fig. 3) as will be described below.

The hinge projections 113 are formed on the opposite sides of the body 111, preferably as a pair of coaxial cylindrical projections, to extend laterally from the surface of body 111.

The second extension pipe section 120 is connected at a distal end to a suction brush (not shown) that draws in dirt and dust from a surface to be cleaned, and the second pipe section 120 is pivotably joined to the first extension tube 110 at a proximal end of the second extension pipe 120. A joint section 121, connected to the cylindrical joint 112, is formed having a complementary shape to cover the circumferential surface of the cylindrical joint 112. The joint section 121 allows the second extension pipe section 120 to be freely pivotable and the second extension pipe section 120 serves to prevent the loss of suction force despite folding of the joint connection between the extension pipe sections.

The release handle 130 is attached by a hinge to the first extension pipe 110 and has a semicylindrical shape so as to enclose a part of the circumferential surface of the first extension pipe 110. In addition, as shown in Fig. 2, the release handle 130 preferably comprises projected levers 131, which more preferably are integrally formed with the body of the release handle 130, and hinge recesses 134, each having a recess opening 132 provided to face outwardly along axial edges of the release handle 130. Each of the recesses 132 may slidingly fit onto and around one corresponding hinge projection 113 and a closed end 133 of each recess opening end 132 being configured to engage a corresponding hinge projection 113. The closed end 133 is formed in such a way that its inner periphery corresponds to the diameter of the corresponding hinge projection 113, thereby providing an interference fit therebetween. Meanwhile, each hinge recess 134 preferably has a bottleneck part h disposed between the recess opening 132 and the closed end 133 for providing the interference fit.

In the embodiment illustrated in Figs. 2 and 3, the levers 131 are formed integrally with the release handle 130. However, the invention is not limited to this arrangement and it is possible to form the levers as separate members and to connect them to the release handle 130 using an appropriate means. However, in order to reduce the processing steps during manufacturing and to easily manufacture the levers, it is preferable that they are produced in an integrally formed mold together with the release handle 130, as shown.

The articulated cover 140 serves to close a connection part J (see Fig. 2) formed by joining the cylindrical joint 112 and the joint section 121 and is provided with oppositely disposed left and right articulated cover parts 140a, 140b. In addition, as shown in Fig. 3, the inner side of each articulated cover part 140a, 140b comprises at least one seat projection 141 on which a resilient member S is seated, and the guide ridge 143 having a discontinuous stepped part 142, which the tip end 131a of a corresponding one of the levers 131 engages.

The guide ridge 143 is formed to project from the inner side of the articulated cover 140 and preferably has the form of a slightly spiral track. Therefore, it is preferable that the stepped part 142 is formed at the junction area of the starting point and ending point of the spiral track of the guide ridge 143, as shown in Fig. 3, and one of the end points face the tip end 131 a of the corresponding lever 131 at the basic or normal position of the corresponding lever 131. In the basic position, the first and second extension pipe sections 110, 120 are aligned in a straight relationship with respect to each other.

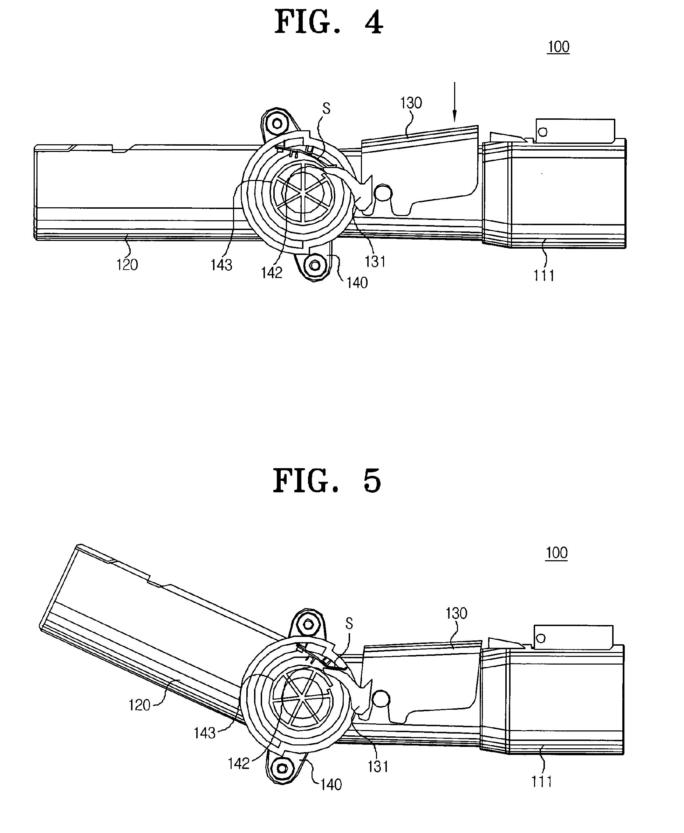

Hereinbelow, operation of the preferred embodiment of the present invention is described with reference to Figs. 4 and 5.

As shown in the drawings, in a bendable extension pipe 100 for a vacuum cleaner according to the present invention, a first extension pipe section 110 is connected to the cleaner body (not shown) and a second extension pipe section 120 is connected to a suction brush (not shown), which draws in air and entrained dirt and dust from a surface to be cleaned. The first and second extension pipe sections 110, 120 are arranged to be foldable relative to a joint connecting one to the other, so a folded or bent configuration may be effected, according to user's selection, and as shown in Fig. 5.

That is, the user may wish to utilize the bendable extension pipe 100 in the bent position, so that the suction brush, to which the pipe 100 is connected, can be in closest contact with a surface to be cleaned, such as when it is desired to clean a floor surface below a bed or a piece of furniture. The user then grasps the release handle 130 that covers the first extension pipe section 110 and exerts a downward force in the direction indicated by the arrow in Fig. 4.

When the user grasps and depresses the release handle 130, a lever 131, preferably formed integrally with the release handle 130, is pivoted along with the release handle 130, so that pivoting the release handle 130 about the hinge projections 113 causes the end 131a of lever 131 to break away from engagement with the stepped part 142 formed on an inner side of an articulated cover 140. At that time, the elastic member S provided in the articulated cover 140 applies resilient restoring force to the lever 131, so that the lever 131 that has broken away from engagement with the stepped part 142 makes face-to-face contact with the guide ridge 141 and pivot along the guide ridge 141.

The seat projection 141 preferably comprises first to third pairs of seat projections 141a, 141b, 141c, (Fig. 3), within which the elastic member S is installed. The third seat projection 141c is formed to be projected at a position for blocking the movement of the tip end 131a as it slides along the guide ridge 143, thereby restraining the further rotational movement of the lever 131. Accordingly, when the user grasps and depresses the release handle, the first and second extension pipe sections 110, 120, that are initially aligned in a straight line, rotate relative to each other until the tip ends of the levers 131 come into contact with the third seat projections 141c. Preferably, the folding angle between the first and second extension pipe sections is retained at about 45 degrees, but an angle of between 40 and 50 degrees is considered appropriate.

In order to return the first and second extension pipe sections to their initial position of being aligned in a straight line, where the folding angle between the extension pipe sections is zero degrees, the user may grasp the first extension pipe section 110 and lift up the second extension pipe section 120 connected to the suction brush (not shown), without requiring any operation or separate instrument. The second extension pipe 120 is forced to pivot about the connection joint as a result of its own weight and the weight of the suction brush (not shown), which are forced downwardly by gravity. As the relationship between the extension pipe sections reach a straight line orientation, the lever 131 engages and becomes seated on the stepped part 142 while being compressed by the elastic member S, so that the first and second extension pipe sections return to the initial straight-line orientation and are fixed thereto by the engagement of the tip end 131a with stepped part 142. Therefore, it is possible to avoid the user's inconvenience of having to operate a separate button or lever so as to unbend the folded extension pipe to the original straight line orientation.

As described above, according to the inventive bendable extension tube for a vacuum cleaner, since the user can provide for a bend in the extension pipe with a simple operation of a lever depression, without needing to bend his or her body or become lower in posture, it is possible to conveniently clean an area below a piece of furniture, such as a bed or sofa. In addition, since it is possible to return the extension pipe from the bent orientation to its initial straight line orientation merely by lifting the extension pipe, the user's convenience can be enhanced.

While the embodiments of the present invention have been shown and described with reference to the preferred embodiments thereof in order to exemplify the principle of the present invention, the present invention is not limited to the above described and illustrated embodiments. It will be understood that various modifications and changes can be made by those skilled in the art without departing from the spirit and scope of the invention. Therefore, it shall be considered that such modifications, changes and equivalents thereof are all included within the scope of the present invention as defined by the appended claims.

## Claims

1. A bendable extension pipe for a vacuum cleaner, in which the extension pipe forms an enclosed flow passage between a vacuum cleaner body and a suction brush, wherein the bendable extension pipe is capable of being selectively bent, wherein the extension pipe comprises:
a first extension pipe section;
a second extension pipe section pivotably connected to the first extension pipe section; and
a release handle selectively locking the first and second extension pipe sections into a first or second orientation, wherein the locking of the first and second extension pipe sections in the first orientation is released when a user depresses the release handle.

2. The bendable extension pipe according to claim 1, wherein the first extension pipe section further comprises:
a tubular body;
a cylindrical joint formed at one end of the tubular body and providing a connection to the second extension pipe section; and
hinge projections formed on the tubular body that project outwardly from a surface of the tubular body so as to provide a mount for the release handle.

3. The bendable extension pipe according to claim 2, wherein the cylindrical joint has an axis of rotation that intersects a virtual axis of the flow passage formed in the tubular body in a perpendicular orientation.

4. The bendable extension pipe according to claim 2 or 3, wherein the hinge projections further comprise a pair of cylindrical projections formed on the opposite sides of the tubular body to project coaxially outwardly from the surface of the tubular body.

5. The bendable extension pipe according to claim 2, 3 or 4, wherein the release handle further comprises:
hinge slots providing for a sliding interference fit onto the corresponding one of the hinge projections, so that the release handle covers at least a part of the circumference of the first extension pipe section; and
a lever for restraining the pivotal movement of the second extension pipe section.

6. The bendable extension pipe according to claim 5, wherein each of the hinge slots further comprise
a slot opening end that opens outwardly from the release handle and a closed end formed to correspond to the diameter of a hinge projection, and
a bottleneck section formed between the opening end and the closed end.

7. The bendable extension pipe according to claim 5 or 6, wherein the lever is formed integrally with the release handle.

8. The bendable extension pipe according to claim 5, 6 or 7, further comprising:
an articulated cover that covers the cylindrical joint between the first and second extension pipe sections, the lever engaging a stop for providing the capability of selectively locking the connection joint from further rotation in the second orientation as the articulated cover is pivoted along with the second extension pipe section; and
an elastic member installed in the inner periphery of the articulated cover for elastically supporting the lever.

9. The bendable extension pipe according to claim 8, wherein the articulated cover further comprises:
at least one seat projection on which the elastic member is seated; and
a guide ridge having a stepped part, the stepped part providing the stop, so that when the tip end of the lever being engages the stepped part, the connection joint is selectively locked from further rotation in the second orientation.

10. The bendable extension pipe according to claim 9, wherein the tip end of the lever is supported by one of the seat projections, thereby restraining the angle from further rotation between the first and second extension pipe sections.

11. The bendable extension pipe according to claim 9 or 10, wherein the guide ridge is formed on the inner surface of the articulated cover to project inwardly from the inner surface, and having the form of spiral track, and the stepped part being formed at the junction of the starting point and the ending point of the spiral track comprising the guide ridge.

12. The bendable extension pipe according to any of claims 8 to 11, wherein the elastic member is a leaf spring.

13. A bendable extension pipe for a vacuum cleaner, in which the extension pipe forms an enclosed flow passage between a vacuum cleaner body and a suction brush and the body of the extension pipe is selectively bendable, wherein the extension pipe comprises:
a first extension pipe section;
a second extension pipe section pivotably connected to the first extension pipe section to define a joint connection therebetween; and
a release handle slidingly fitted onto a plurality of hinge projections projecting outwardly from the surface of the first extension pipe section, the release section covering at least a part of the circumference of the first extension pipe section while allowing a user to selectively depress the release handle, the release handle having at least one lever integrally formed at one end thereof;
at least one articulated cover that closes the joint connection between the first and second extension pipe sections, the lever being selectively locked as the second extension pipe section is pivoted; and
a resilient member disposed on the inner surface of the articulated cover capable of resiliently supporting the lever, and
such that the locking of the first and second extension pipe sections is released when the user depresses the release handle, whereby the first and second extension pipe sections become capable of bending relative to each other.
